# EUROPÄISCHE PATENTSCHRIFT

(11) **EP 0 564 954 B1**
(45) Veröffentlichungstag und Bekanntmachung des Hinweises auf die Patenterteilung: **19.06.1996**
(21) Anmeldenummer: 93105199.9
(22) Anmeldetag: 29.03.1993
(51) Int. Cl.: F16G 13/06

(54) **Kettenlasche und Verfahren zu deren Herstellung**
Chain link plate and method of manufacturing the same
Plaque de maillon de chaîne et son procédé de fabrication

(30) Priorität: 09.04.1992 DE 4211902
(43) Veröffentlichungstag der Anmeldung: 13.10.1993
(73) Patentinhaber: FRAUNHOFER-GESELLSCHAFT ZUR FÖRDERUNG DER ANGEWANDTEN FORSCHUNG E.V., D-80636 München (DE); KETTEN-WULF BETRIEBS GmbH & CO. KG, D-59889 Eslohe (DE)
(72) Erfinder: Rinschede, Alfons, Dipl.-Ing., W-4600 Dortmund 15 (DE); Wilke, Hermann, Ing./grad., W-5779 Eslohe 6 (DE)

(56) Entgegenhaltungen:
- EP-A- 0 068 424
- DE-A- 2 836 498
- DE-A- 3 317 046
- DE-C- 3 408 295
- US-A- 4 757 681
- PATENT ABSTRACTS OF JAPAN, Band 13, Nr. 194 (M-823), 10. Mai 1989; & JP-A-1 021 246 (NIPPON CARBON) 24-01-1989
- PATENT ABSTRACTS OF JAPAN, Band 11, Nr. 380 (M-650), 11. Dezember 1987; & JP-A-62 151 647 (TSUBAKIMOTO CHAIN CO.) 06-07-1987

## Beschreibung

Die Erfindung betrifft eine Kettenlasche gemäß dem Oberbegriff des Hauptanspruches.

Aus der DE-C 34 08 295 ist eine Kette aus nichtmetallischen Werkstoffen mit mehreren Kettenlaschen entsprechend den Angaben im Oberbegriff von Anspruch 1 bekannt, wobei jede Kettenlasche an ihren Enden jeweils eine Durchtrittsöffnung für einen Bolzen aufweist und die Kettenlasche aus scheibenförmigen, mit flüssigem Harz getränkten und ringförmig gewickelten Rovings gebildet ist. Die Kettenlasche kann in ihrem zwischen den Durchtrittsöffnungen liegenden Bereich einen Freiraum zur Aufnahme von Anbauteilen aufweisen oder sie kann massiv ausgebildet sein, wobei in diesem Fall die Anbauteile angeschraubt oder angestiftet werden. Die bekannte Kettenlasche wird so hergestellt, daß ein mit flüssigem Harz getränkter Roving solange um zwei Zylinderkörper aufgewickelt wird, bis der Zwischenraum zwischen den beiden fast gefüllt ist. Sodann wird der aufgewickelte Roving von mindestens zwei Preßbacken in die endgültige Kettenlaschenform gepreßt und anschließend ausgehärtet. Die Freiräume, welche zwischen den den Kern bildenden Vorsprüngen zur Anordnung von Anbauteilen bzw. bei einer massiven Bauweise zwischen den beiden Zylinderkörper um die die Wicklung angeordnet wird, frei bleiben, werden mit harzgetränkten GFK-Schnitzeln ausgespachtelt. Bei derartigen Kettenlaschen kann die Homogenität des Materials der Kettenlasche durch die GFK-Schnitzel, welche die Freiräume ausfüllen, gestört werden; und die Festigkeit eines ausgespachtelten Raumes kann sich dadurch zufällig ergeben und nicht kontrollierbar sein. Des weiteren ist der Herstellungsprozeß aufwendig, da mehrere Verfahrensschritte notwendig sind, wie z.B. der Preßvorgang oder der Auffüllvorgang mit GFK-Schnitzeln, welcher manuell durchgeführt werden muß.

Weiterhin ist aus Figur 8 der US-A 4 757 681 eine gattungsgemäße Anordnung bekannt, bei der ein nicht näher definierter Körper zwischen den Hülsen angeordnet ist.

Daneben ist aus der DE-A 28 36 498 eine nichtmetallische Kette bekannt, bei der die Kettenlaschen aus einem Werkstoff bestehen, welcher bestimmte Mindestanforderungen bezüglich Zugfestigkeit, Kriechgrenze und Formänderungsvermögen erfüllen muß. Solche Kettenlaschen, auch wenn sie aus einem Werkstoff bestehen, welcher die notwendigen Voraussetzungen erfüllt, biegen sich unter höheren Belastungen durch, wodurch der Bolzen aus der Aufnahme herausspringen kann. Um das unerwünschte Durchbiegen auszugleichen und das Herausspringen des Bolzens aus der Aufnahme zu vermeiden, wird für den letzteren ein Preßsitz vorgeschlagen. Eine andere Möglichkeit, der Durchbiegung solcher Kettenlaschen zu begegnen, ist die Herstellung von Laschen, die eine größere Dicke aufweisen. Die erste Ausbildung ist aufwendig bei der Montage, die zweite weist eine Dicke der Kettenlasche auf, die kaum einsatzfähig ist.

Es sind auch Pleuel bekannt, welche so hergestellt sind, daß um zwei Pleuelaugen eine Schlaufe aus einem Faserverbundwerkstoff angeordnet ist. Der sich unter dem Pleuelauge befindliche Hohlraum wird zum Erreichen der notwendigen Zugvorspannung für die Wicklung durch Injektion einer Reaktionsharzmasse ausgefüllt. Dieses Verfahren bzw. das so hergestellte Fertigteil führt zu ähnlichen Verhältnissen wie oben angegeben.

Der vorliegenden Erfindung liegt die Aufgabe zugrunde, eine Kettenlasche zu entwickeln, welche eine hohe Stabilität und Festigkeit bietet sowie ein geringes Gewicht aufweist. Das Verfahren zur Herstellung einer solchen Kettenlasche soll so ausgestaltet sein, daß die Kettenlaschen schnell und preisgünstig produziert werden können.

Diese Aufgabe ist durch die in Anspruch 1 angegebenen Merkmale gelöst. Das Verfahren zur Herstellung der erfindungsgemäßen Kettenlasche ist in den Ansprüchen 8 und 9 angegeben.

Die Kettenlasche ist so ausgebildet, daß zwischen zwei Hülsen ein Druckkörper angeordnet ist und daß um diese Einheit außen eine Wicklung angeordnet ist. Die Hülsen können als Aufnahmen aus einem Metallwerkstoff oder einem anderen Werkstoff hergestellt sein. Es ist vorteilhaft, wenn der Druckkörper aus einem Leichtmetallwerkstoff oder Kunststoff besteht. Wichtig ist, daß ein Material vorgesehen wird, welches auch die zeitweise auf die Kettenlasche einwirkenden Druckkräfte aufnehmen kann. Durch eine Ausgestaltung der Kettenlasche derart, daß eine Zugrichtung mit einem Druckkörper zusammenwirkt, erreicht eine solche Kettenlasche die gleiche Festigkeit und Einsetzbarkeit wie eine Stahllasche. Das Gewicht der Kettenlasche ist jedoch erheblich geringer.

In Ausgestaltung sieht die Erfindung vor, daß der Druckkörper und die Hülsen der Kettenlasche als einstückige Einheit ausgestaltet sind. Vorteilhaft ist, wenn die einstückige Einheit, die einen Körper darstellt, aus einem Glasfaser-Matten-Gewebe besteht. Ein solcher Kunststoffkörper ist besonders leicht herstellbar: er kann aus einer Mattengewebeplatte einfach ausgefräst werden. Zur Aufnahme der Zugwicklung ist in dem Kunststoffkörper eine umlaufende Nut vorhanden. Die Nut wird durch Einfräsen eingebracht und verhindert ein seitliches Abrutschen der Wicklung.

Die um den Druckkörper und die Aufnahmen umlaufende Wickelschlaufe hat die Aufgabe, die Belastungskräfte, d.h. die auf die Kettenlasche einwirkenden Zugkräfte aufzunehmen. Diese Schlaufe besteht aus einem Kohlefaserverbundwerkstoffmaterial. Vorteilhafterweise wird die Zugwicklung, d.h. die Wickelschlaufe so angeordnet, daß die Verstärkungsfaser des Verbundwerkstoffes entsprechend der Hauptbelastung, d.h. der Zugbelastung der Lasche verlaufen. Dadurch weist die erfindungsgemäße Kettenlasche die optimalen Eigenschaften auf: die zeitweilig auftretenden Druckkräfte werden durch den Druckkörper bzw. den Kunststoffkörper aufgenommen, die Hauptbelastung, d.h. die Zugbeanspruchung wird durch die umlaufende Verbundfaser-Wickelschlaufe aufgenommen. Die Zugfestigkeit der Verbundfaserwickelschlaufen ist sehr hoch und entspricht dieser eines Metallwerkstoffes wie z.B. Stahl. Durch unterschiedliche Länge der Druckkörper können unterschiedlich große Kettenlaschen hergestellt werden, was ein besonderer Vorteil dieser Ausführungsform der Kettenlasche ist. Dadurch ist die Möglichkeit der schnellen Änderung der Abmessungen der Kettenlaschen gegeben, was zu einem kostengünstigen Herstellungsvorgang führt.

Vorteilhaft ist, wenn die Hülsen im wesentlichen ringförmig ausgestaltet sind, jedoch an ihren dem Druckkörper zugewandten Seiten einen geradlinigen Abschnitt aufweisen. Dadurch sind sie gegen Verdrehung gesichert.

In die mit der umlaufenden Nut ausgestatteten Hülsen greifen die Enden des Druckkörpers, welcher als ein flaches Rechteck ausgebildet ist, längs ihrer geradlinigen Abschnitte ein. Dadurch ist der Druckkörper zunächst für den Wickelvorgang fixiert und bildet mit den Aufnahmehülsen einen zusammenhängenden Körper.

Es ist vorteilhaft, wenn die Aufnahmen mit einer Verdrehsicherung für die Bolzen oder Buchsen versehen sind. In eine Kettenlasche mit einem Kunststoffkörper wird die Verdrehsicherung eingefräst oder eingeklebt. In den Aufnahmehülsen wird die Verdrehsicherung eingefräst oder eingestempelt.

Die erfindungsgemäße Kettenlasche kann vorteilhafterweise zur Herstellung einer Kette, insbesondere einer Buchsenkette verwendet werden.

Das Verfahren zur Herstellung der Kettenlasche wird so durchgeführt, daß um den Kunststoffkörper bzw. den Druckkörper mit an seinen Enden angeordneten Hülsen eine Kohlefaser-Verbundwerkstoffschlaufe als Wicklung angeordnet wird derart, daß ein Roving als Endlosfaser durch Rotation des Körpers mit definierter Zugspannung unter gleichzeitiger Tränkung mit Harz von einer Spule in die Nut eingewickelt wird, bis die Nut vollständig ausgefüllt ist. Die so hergestellte Kettenlasche rotiert solange weiter, bis die Vernetzungsreaktionen zwischen Verstärkungswerkstoff und Matrix stattgefunden haben. Bei der Herstellung der erfindungsgemäßen Kettenlasche ist es wichtig, daß die Verstärkungskomponenten, d.h. die CFK-Faser in Hauptbelastungsrichtung, d.h. in Zugrichtung der Kettenlasche angeordnet sind. Durch das Wickeln der Verbundfaserschlaufe mit Vorspannung wird erreicht, daß die Kohlefaser eine höhere Belastung übertragen kann. Zur Herstellung der Wicklung kann der Körper der Kunststofflasche, z.B. in einer Drehbank eingespannt werden.

Anhand der nachfolgenden zwei Ausführungsbeispiele wird die erfindungsgemäße Kettenlasche näher erläutert. Es zeigen:
Fig.1: eine Kettenlasche mit zwei Aufnahmehülsen und einem Druckstück;
Fig.2: eine Kettenlasche mit einem Kunststoffkörper

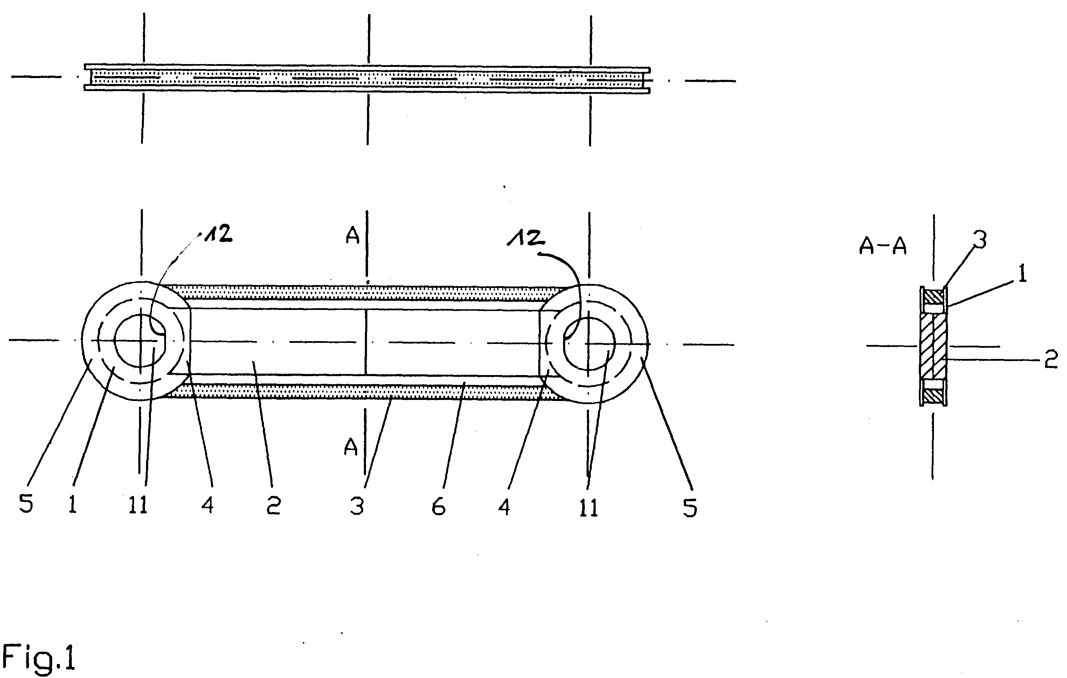

Die in Fig. 1 dargestellte Kettenlasche weist zwei Aufnahmehülsen 1, einen Druckkörper 2 und eine Wicklung 3 auf. Die Aufnahmehülsen 1 sind im wesentlichen ringförmig ausgebildet und nur in dem, dem Druckkörper 2 zugewandten Bereich 4, weisen sie eine geradlinige Form auf. Auch die Durchtrittsöffnungen 11 für die Bolzen oder Buchsen haben die gleiche Form, was für die Verdrehsicherheit der durchgesteckten Elemente sorgt. Die Aufnahmehülsen 1 besitzen eine sich über ihren Umfang erstreckende Nut 5 in welche auf dem geradlinigen Abschnitt 4 der Druckkörper 2 eingreift. In dem ringförmigen Teil der Hülse in der Nut 5 befindet sich umfangsseitig die Wicklung 3. Zwischen dem Druckkörper 2 und dem parallel zu ihm verlaufenden Abschnitt der Wickelschlaufe 3 ist ein Luftspalt 6 vorgesehen.

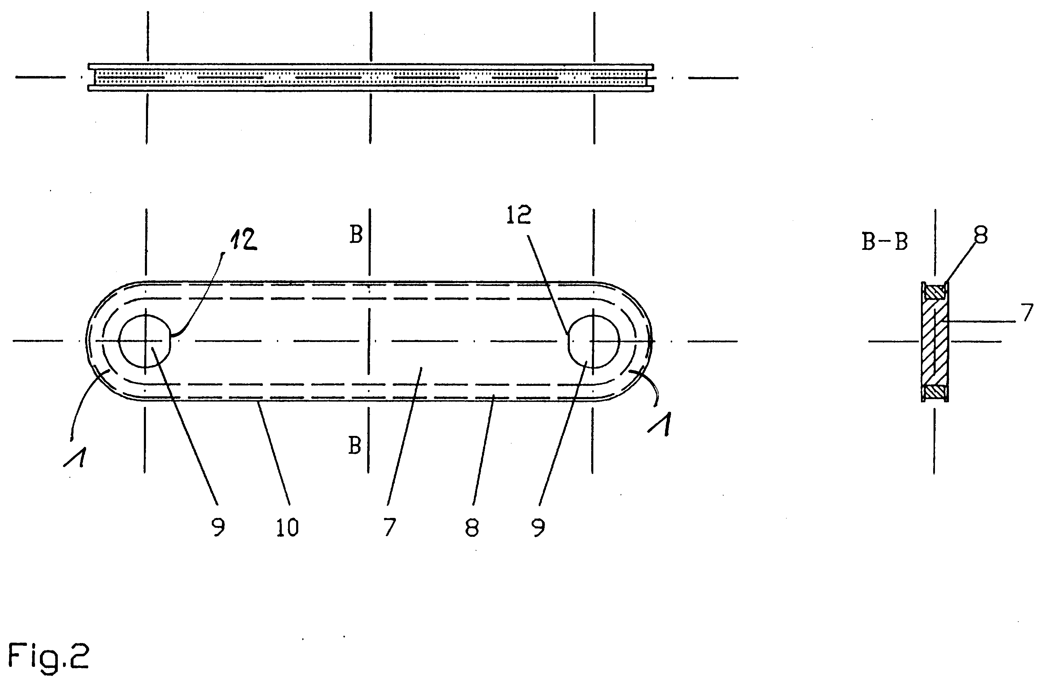

Die in Fig. 2 dargestellte Kettenlasche besteht aus einem Kunststoffkörper 7 und einer Wickelschlaufe 8 aus Faserverbundwerkstoff. Der Kunststoffkörper 7 weist an seinen beiden Enden Aufnahmen 9 auf, welche innenseitig einen geradlinigen Abschnitt 12 als Verdrehsicherung zum Durchtritt von Bolzen oder Buchsen besitzen. Die Aufnahmen 9 sind als Durchtrittsöffnungen für die genannten Elemente ausgebildet. Der Kunststoffkörper 7 weist über seinen gesamten Umfang eine Nut 10 auf, in der die Verbundfaserwicklungsschlaufe 8 angeordnet ist.

## Patentansprüche

1. Kettenlasche, die in jedem ihrer beiden Endbereiche jeweils mit einer Bolzen- oder Buchsenaufnahme (11; 9) und mit einer ringförmig die gesamte Umfangslänge der Lasche umfassend verlaufendenden Wicklung (3; 8) aus Harz getränkten Rovings versehen ist,
**gekennzeichnet durch** die folgenden Merkmale:
- die Kettenlasche besteht aus einem Druckkörper (2; 7) mit an seinen beiden stirnseitigen Enden befindlichen mit ihrem Umfang am Druckkörper angeordneten Hülsen (1), wobei Bohrungen der Hülsen die Bolzen- oder Buchsenaufnahmen (11; 9) bilden,
- die Wicklung (3; 8) verläuft außen um die Einheit aus Druckkörper (2; 7) und Hülsen (1)
- die Hülsen weisen umfangseitig eine Nut (5; 10) auf,
- die Wicklung (3; 8) ist in dem ringförmigen Umfangsabschnitt in der Nut angeordnet.

2. Kettenlasche nach Anspruch 1,
**gekennzeichnet durch** die folgenden weiteren Merkmale:
- die Hülsen (1) sind im wesentlichen ringförmig und an ihren dem Druckkörper (2) zugewandten Seiten unter Bildung eines geradlinigen Abschnittes (4) abgeflacht ausgebildet, und
- der Druckkörper (2) greift längs des geradlinigen Abschnittes (4) in die Nut (5) der Aufnahmehülse (1) ein.

3. Kettenlasche nach einem der vorangegangenen Ansprüche,
**dadurch gekennzeichnet**, daß der Druckkörper (2; 7) aus Leichtmetall oder Kunststoff besteht.

4. Kettenlasche nach Anspruch 1 oder 2,
**dadurch gekennzeichnet**,
daß die Einheit aus Druckkörper (7) und Hülsen (1) einstückig ausgebildet ist.

5. Kettenlasche nach Anspruch 4,
**dadurch gekennzeichnet**,
daß die Einheit aus Kunststoff besteht.

6. Kettenlasche nach einem der vorangegangenen Ansprüche 1 bis 3,
**dadurch gekennzeichnet**,
daß ein Luftspalt (6) zwischen der Wicklung (3) und dem Druckkörper (2) an dessen Längsseite vorhanden ist.

7. Kettenlasche nach einem oder mehreren der vorangegangenen Ansprüche 1 bis 3 und 6,
**dadurch gekennzeichnet**,
daß die Bolzen- bzw. Buchsenaufnahmen (1; 9) mit einer Verdrehsicherung (12) versehen sind.

8. Verfahren zur Herstellung einer Kettenlasche nach einem der Ansprüche 1 bis 3,
**dadurch gekennzeichnet**,
daß in die Nuten (5) der Hülsen (1) der Druckkörper (2) eingelegt wird und die Wicklung (3) um die Aufnahmehülsen (1) gewickelt wird, indem ein Kohlefaserverbundwerkstoff-Roving als Endlosfaser durch Rotation der durch Hülsen (1) und Druckkörper (2) gebildeten Einheit mit definierter Zugspannung unter gleichzeitiger Tränkung mit Harz von einer Spule in die Nuten (5) der Hülsen (1) eingewickelt wird, bis die ringförmigen Abschnitte der Nuten (5) vollständig in radialer Richtung ausgefüllt sind, und daß die so hergestellte Kettenlasche solange weiterrotiert, bis die Vernetzungsreaktionen zwischen der Endlosfaser und dem getränktem Harz stattgefunden haben.

9. Verfahren zur Herstellung einer Kettenlasche nach Anspruch 5, **dadurch gekennzeichnet**,
- daß zunächst in die aus Druckkörper (2) und Hülsen (1) einstückig ausgebildete Einheit aus Kunststoff umfangsseitig die Nut (10) eingebracht wird,
- daß ein Roving als Endlosfaser durch Rotation der Einheit mit definierter Zugspannung unter gleichzeitiger Tränkung mit Harz von einer Spule in die Nut (10) zur Bildung der Wicklung (8) eingewickelt wird, bis diese vollständig ausgefüllt ist, und
- daß die so hergestellte Kettenlasche solange weiterrotiert, bis die Vernetzungsreaktionen zwischen Endlosfaser und dem getränktem Harz stattgefunden haben.

## Claims

1. A chain side bar, provided at each of its two end regions with a bolt or bush-receiving member (11; 9) and with a winding (3; 8) made of resin-impregnated rovings and extending in a ring around the entire peripheral length of the side bar,
characterised by the following features:
- the side bar comprises a pressure member (2; 7) having sleeves (1) disposed at each of its two ends and with their periphery against the pressure member, the bolt or bush-receiving members (11; 19) being in the form of bores in the sleeves,
- the winding (3; 8) extends externally around the unit comprising the pressure member (2; 7) and sleeves (1)
- the sleeves have a peripheral groove (5; 10), and
- the winding (3; 8) is disposed in the annular peripheral portion in the groove.

2. A chain side bar according to claim 1, characterised by the following additional features:
- the sleeves (1) are substantially annular and their sides facing the pressure member (2) are flattened to form a straight portion (4) and
- the pressure member (2) extends along the straight portion (4) into the groove (5) in the receiving sleeve (1).

3. A chain side bar according to any of the preceding claims, characterised in that the pressure member (2; 7) is of light metal or plastics.

4. A chain side bar according to claim 1 or 2, characterised in that the unit comprising the pressure member (7) and sleeves (1) is in one piece.

5. A chain side bar according to claim 4, characterised in that the unit is made of plastic.

6. A chain side bar according to any of the preceding claims 1 to 3, characterised in that an air gap (6) is provided between the winding (3) and the longitudinal side of the pressure member (2).

7. A chain side bar according to one or more of the preceding claims, characterised in that the bolt or bush-receiving members (1; 9) are provided with an anti-twist means (12).

8. A method of manufacturing a chain side bar according to any of claims 1 to 3, characterised in that the pressure member (2) is inserted into the grooves (5) in the sleeves (1) and the winding (3) is wound around the sleeves (1) by winding an endless fibre in the form of a carbon-fibre composite roving off a reel into the grooves (5) of the sleeves (1), by rotating the unit made up of the sleeves (1) and pressure member (2) at a defined tensile stress with simultaneous impregnation with resin until the annular portions of the grooves (5) are completely filled in the radial direction, and the resulting chain side bar is additionally rotated until the cross-linking reactions between the endless fibre and the impregnated resin have occurred.

9. A method of manufacturing a chain side bar according to claim 5, characterised in that
- the groove (10) is first formed in the periphery of the plastic unit formed in one piece from the pressure member (2) and sleeves (1),
- in that an endless fibre in the form of a roving is wound off a reel into the groove (10) to form the winding (8), by rotating the unit at a defined tensile stress and simultaneous impregnation with resin, until the groove is completely filled, and
- in that the resulting chain side bar is additionally rotated until the cross-linking reactions between the endless fibre and the impregnated resin have occurred.

## Revendications

1. Maillon de chaîne ayant à chacune de ses deux zones d'extrémité, chaque fois un logement de douille ou de goujon (11 ; 9) et un enroulement annulaire (3 ; 8) en stratifil de verre textile imprégné de résine, entourant toute la longueur périphérique du maillon, caractérisé par les caractéristiques suivantes :
- le maillon se compose d'un organe de compression (2, 7) ayant à ses deux extrémités frontales, des douilles (1) dont la périphérie est prévue sur l'organe de compression et les perçages des douilles forment les logements recevant les goujons ou les douilles (11 ; 9),
- l'enroulement (3 ; 8) se trouve extérieurement autour de l'ensemble formé par l'organe de compression (2 ; 7) et les douilles (1),
- les douilles ont une rainure (5 ; 10) sur leur côté périphérique,
- l'enroulement (3 ; 8) est prévu dans la rainure dans le segment périphérique annulaire.

2. Maillon de chaîne selon la revendication 1, caractérisé par les caractéristiques suivantes :
- les douilles (1) ont essentiellement une forme annulaire et sur leur côté tourné vers l'organe de compression (2) elles sont aplaties avec un segment droit (4) et,
- l'organe de compression (2) pénètre le long du segment rectiligne (4) dans la rainure (5) de la douille de réception (1).

3. Maillon de chaîne selon l'une des revendications précédentes, caractérisé en ce que l'organe de compression (2 ; 7) est en métal léger ou en matière plastique.

4. Maillon de chaîne selon la revendication 1 ou 2, caractérisé en ce que l'ensemble formé du corps de compression (2, 7) et des douilles (1) est en une seule pièce.

5. Maillon de chaîne selon la revendication 4, caractérisé en ce que, l'ensemble est en matière plastique.

6. Maillon de chaîne selon l'une des revendications précédentes 1 à 3, caractérisé en ce qu'un intervalle d'air (6) existe entre l'enroulement (3) et l'organe de compression (2) le long de ses grands côtés.

7. Maillon de chaîne selon une ou plusieurs des revendications précédentes 1 à 3 et 6, caractérisé en ce que les logements de goujons ou de douilles (1 ; 9) sont munis d'une sécurité antirotation (12).

8. Procédé de réalisation d'un maillon de chaîne selon l'une des revendications 1 à 3, caractérisé en ce qu'on place l'organe de compression (2) dans les rainures (5) des douilles (1) et on pose l'enroulement (3) autour des douilles de réception (1) en enroulant un stratifil de fils de verre textile (rowing) matériau composite avec des fibres de carbone sous la forme de fibres sans fin, par rotation de l'ensemble formé par les douilles (1) et l'organe de compression (2), avec une tension déterminée tout en imprégnant avec de la résine à partir d'une bobine, dans les rainures (5) des douilles (1) jusqu'à ce que les segments annulaires des rainures (5) soient complètement remplis dans la direction radiale et on continue de faire tourner le maillon de chaîne ainsi réalisé jusqu'à ce que les réactions de réticulation se soient produites entre les fibres sans fin et la résine d'imprégnation.

9. Procédé de fabrication d'un maillon de chaîne selon la revendication 5, caractérisé en ce que,
- on réalise tout d'abord la rainure (10) du côté périphérique dans l'ensemble en matière plastique formé par l'organe de compression (2) et les douilles (1) en une pièce,
- on place un stratifil de fils de verre textile (rowing), comme fil sans fin, par rotation de l'ensemble en exerçant une traction déterminée tout en imprégnant avec de la résine, à partir d'un bobine, dans la rainure (10) pour former l'enroulement (8) jusqu'à ce que la rainure soit complètement remplie et,
- on continue de faire tourner le maillon de chaîne ainsi réalisé jusqu'à ce que les réactions de réticulation se soient produites entre la fibre sans fin et la résine d'imprégnation.
